# EUROPEAN PATENT APPLICATION

(11) **EP 0 896 470 A1**
(43) Date of publication of application: **10.02.1999**
(21) Application number: 97202435.0
(22) Date of filing: 06.08.1997
(51) Int. Cl.: H04N 5/91

(54) **Apparatus transmitting a video signal protected against recording**

(71) Applicant: THOMSON multimedia S.A., 92648 Boulogne Cedex (FR)
(72) Inventor: Fujita, Mutsumi, Thomson Multimedia, 92648 Boulogne Cedex (FR)
(74) Representative: Brykman, Georges

(57) **Abstract**

Apparatus transmitting a composite video signal protected against recording by protection signals appearing during blanking periods of each frame.

This apparatus has a SCART output connector (20) and generates a first control signal during blanking periods and a second control signal during visible lines.

These control signals are generated on the blanking pin of the connector. They prevent that a RGB encoder (10) can be used for deleting the protection signals.

The apparatus is for instance a DVD player.

## Description

The invention relates to an apparatus transmitting a video signal protected against recording.

It has been recognized since several years that copyright owners of movies, clips, and similar works, should have the possibility to protect the video transmission of the corresponding software against copying by videotape recorders, camcorders and like devices.

The video transmission is either broadcasting or reproduction by a videodisk player or a video tape player.

The most common way of protection is to provide the composite video signal, during its blanking period, with a protection signal preventing the recording. This prevention of recording is obtained for instance by an appropriate control of the gain of the amplifier of the recorder.

This protection is efficient against recording by all available types of recorders. Of course it does not prevent the display of the picture on a TV receiver. However when RGB signals are transmitted it has been ascertained that it is possible to remove legally the protection from the video signal with a very simple and cheap encoding device which encodes RGB signals into a composite video signal, for instance of the PAL or SECAM type.

This encoding device is commonly used for converting into a composite video signal RGB signals generated by a computer. In this way the converted RGB signals are recordable by a video tape recorder.

This encoder can also be used to encode the transmitted RGB signals into a composite video signal. As these RGB signals are transmitted without any protection, the resulting composite video signal is therefore unprotected, unlike the parallel transmitted composite video signal. It is recalled here that digital video disk players (DVD players) provide in parallel RGB signals and composite video signals. The RGB signals are useful for displaying pictures of high quality on a TV receiver.

The object of the invention is to provide a transmitting apparatus by which it is not possible to use an encoder in such a way that the composite video signal generated from the transmitted RGB signals has no protection against illegal recording when this protection is required.

The transmitting apparatus according to the invention is characterized in that, during each frame of the protected composite video signal, it provides a first control signal during the period when the protection signal is transmitted and a second control signal during the period of the visible lines.

The first and second control signals can be used to control an encoding device in such a way that the composite video signal, formed fro RGB signals transmitted in parallel with a protected composite video signal, comprises the protection signals which are derived fro the transmitted composite video signal.

In an embodiment the transmitting apparatus comprises a SCART output connector and the first and second control signals are provided on the blanking or rapid switching exit, i.e. on pin 16 of the SCART standard. The SCART connector is described in European standard EN 500491.

The invention concerns also an encoder comprising an input connector, preferably of the SCART type, having an input for a composite video signal and a control input for receiving a control signal during blanking periods, this encoder being such that the outputted composite video signal is formed from RGB signals during visible lines and from the inputted composite video signal during blanking periods.

In addition to a SCART input connector, this encoder has preferably also a SCART output connector.

Other features and advantages of the invention will appear with the description of certain of its embodiments, this description being made with reference to the appended drawings, in which :
- figure 1 represents the output of a digital video disk player and an encoder according to the invention, together with the input of a video tape recorder, and
- figures 2a-2c are diagrams illustrating a method according to the invention wherein the use of an encoder for removing the protection signal from a composite video signal is not authorized.

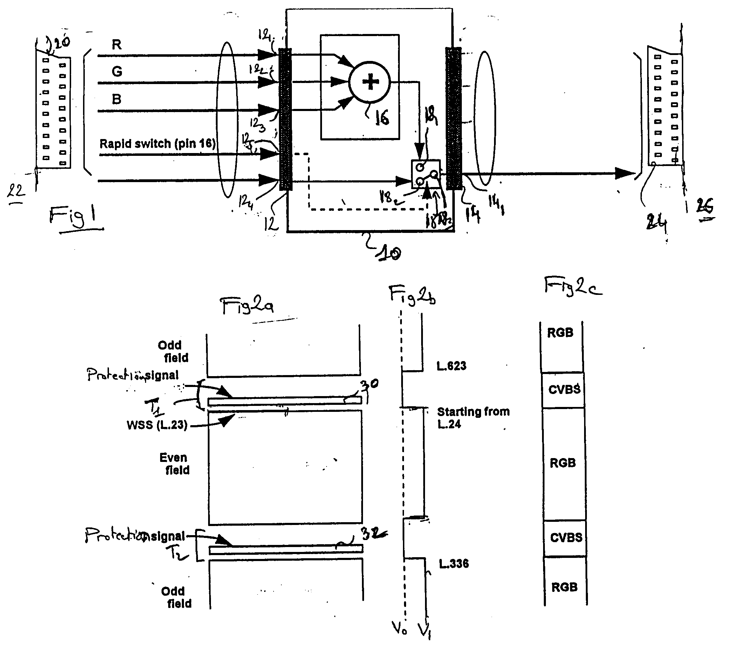

Before describing figure 1 in details it must be understood that this figure represents an encoder connected between a player and a recorder, but that this connection is useless, because the goal of the invention is to prevent the unauthorized recording of signals when using an encoder. This figure simply shows how the invention prevents this unauthorized recording.

The encoding device 10 represented on figure 1 comprises a SCART input connector 12 and a SCART output connector 14.

The input connector 12 has a pin 12₁ for the RED(R) video signal (pin 15 in the standard), a pin 12₂ for the GREEN(G) video signal (pin 11 in the standard) and a pin 12₃ for the BLUE(B) video signal (pin 7 in the standard).

The R, G and B signals are converted by a circuit 16 of the encoding device 10 into a composite video signal provided, according to the invention, to a first input terminal 18₁ of a switch 18 of the device 10. This switch 18 has a second input terminal 18₂ connected to the composite video pin 12₄ (pin 20 in the standard) of input connector 12. The common terminal 18₃ of switch 18 is connected to the composite video pin 14₁ (pin 19 in the standard) of the output connector 14.

Switch 18 is controlled by a signal provided on the blanking pin 12₅ (pin 16 of the standard) of input connector 12. The control is such that terminal 18₁ is connected to output terminal 18₃ when the signal on pin 12₅ has a first value and terminal 18₂ is connected to terminal 18₃ when the control signal has a second value. In other words the pin 14₁ of output connector 14 delivers the output signal of encoder 16 when the control signal of pin 12₅ has a first value and transmits the signal of pin 12₄ (composite video) when this control signal has the second value.

The input connector 12 of device 10 is connected to the SCART output connector 2 of a digital video disk player (DVD player) 22.

The output connector 14 is connected to the SCART input connector 24 of a video cassette recorder (VCR) 26.

The DVD player 22 provides video signals which may contain a protection signal preventing the unauthorized recording.

This protection signal is, of course, effective when the connector 20 is directly connected to connector 24, the R, G and B pins of input connector 24 of VCR 26 being not used in the VCR ; i.e., in case of direct connection, the VCR 26 receives only the composite video signal.

This protection signal is also effective when the user connects the encoder 10 between the player and the recorder as represented.

Figure 2a represents a frame of a composite video signal comprising a protection signal.

This protection signal is provided during the blanking periods T₁, T₂. For a TV system with 625 lines and 50 fields/second, T₁ is between the second half of line 623 and the first half of line 23 and T₂ is between lines 311 and 335. For a TV system with 525 lines and 60 fields/second, T₁ is between lines 1 and 21, and T₂ is between lines 264 et 284. In a 625/50 TV system the protection signals are provided, for instance, between the lines 8 and 16 and between the lines 320 and 328.

Moreover the video signal comprises, at line 23 (for a 625/50 TV system), a wide screen signaling WSS used to indicate the aspect ratio of the picture, i.e. 16/9 or 4/3.

The blanking pin (pin 16 of standard) of the connector 20 of player 22 provides a rapid switching signal, generated by the player, which is represented on figure 2b.

This signal is the control signal for switch 18 of device 10.

This signal has a value Vₒ (low) during the blanking periods, i.e., for a 625/50 TV system, between lines 624 and 23, and between line 311 and line 335. The signal of figure 2b has the value V₁ (high) during the lines which are normally displayed (visible lines).

On figure 2c "RGB" means that during the picture lines visible lines) the output 14₁ of the encoder provides the output of encoder 16 and "CVBS" means that during blanking periods the output 14₁ provides the signal coming from input 12₄, i.e. containing the protection signal and the WSS signal.

During the normal use of device 16, for instance when it is used to encode the RGB outputs from a computer, the switch 18 is operated in the same way by the computer. The pin 12₅ receives the synchronizing signal which is necessary for generating the composite video signal.

Although the invention has been described for the use of a DVD player, it may be used with other apparatuses which transmit video signals protected against recording. These other apparatuses are, for instance, video tape players and decoders for receiving cable or satellite TV signals (set top boxes).

## Claims

1. Apparatus transmitting a composite video signal protected against recording by protection signals (30, 32) appearing during predetermined fractions (T₁, T₂) of each frame, and, in parallel, RGB signals, characterized in that it generates a first control signal (V₀) during the predetermined fractions and a second control signal (V₁) during other fractions.

2. Apparatus according to claim 1, characterized in that the protection signal is generated during the blanking periods, in that the first control signal (V₀) is generated also during blanking periods, the second control signal (V₁) being generated during the visible lines.

3. Apparatus according to claim 1 or 2, characterized in that it comprises a SCART output connector and in that the control signals are provided on the blanking pin.

4. Apparatus according to claim 2, characterized in that, for a TV system with 625 lines and 50 fields/second, the first control signal is generated between lines 624 and 23 and between lines 311 and 335, and for a TV system with 525 lines and 60 fields/second, the first control signal is generated between lines 1 and 21 and between lines 264 and 284.

5. Apparatus according to any of the previous claims, characterized in that the control signals are in a format such that they are able to control the operation of an encoder (10) converting RGB signals into composite video signals, this encoder being connected to transmit the protection signal when it is controlled by the first control signal.

6. Apparatus according to any of the previous claims, characterized in that a signal representing the format ratio of the picture is transmitted during the predetermined fractions of each frame.

7. Encoding device for converting a RGB signal into a composite video signal, characterized in that it comprises a SCART input connector (12) wherein the blanking pin (12₅) provides a control signal such that the output (14) of the device provides the composite video signal provided on the corresponding pin (12₄) of the SCART input connector when this control signal has a first value (V₀) and the converted RGB signal when the control signal has a second value (V₁).

8. Encoding device according to claim 7, characterized in that it comprises a switch (18) for selectively transmitting the RGB input and the composite video input to the output, according to the value of the control signal.

9. Application of the apparatus according to any of claims 1-6 to a video disk player, preferably a digital video disk player.
